(19)

**Europäisches Patentamt**

**European Patent Office**

**Office européen des brevets**

(11) **EP 1 441 436 A2**

(12) **EUROPÄISCHE PATENTANMELDUNG**

(43) Veröffentlichungstag:
 **28.07.2004 Patentblatt 2004/31**

(51) Int Cl.⁷: **H02P 21/00**, H02P 9/30

(21) Anmeldenummer: **03025646.5**

(22) Anmeldetag: **07.11.2003**

(84) Benannte Vertragsstaaten:
 **AT BE BG CH CY CZ DE DK EE ES FI FR GB GR HU IE IT LI LU MC NL PT RO SE SI SK TR**
 Benannte Erstreckungsstaaten:
 **AL LT LV MK**

(30) Priorität: **20.01.2003 DE 10301826**

(71) Anmelder: **ROBERT BOSCH GMBH**
 **70442 Stuttgart (DE)**
 Benannte Vertragsstaaten:
 **DE GB FR IT**

(72) Erfinder:
 • **Eisenhardt, Martin**
  **71272 Renningen (DE)**
 • **Seufert, Alexander**
  **97294 Unterpleichfeld (DE)**
 • **Rechberger, Klaus**
  **715638 Ludwigsburg (DE)**

(54) **Regelsystem mit einer einfachen Hardware-Einheit zur Regelung einer elektrischen Maschine wahlweise im PWM- oder Blockbetrieb**

(57) Die Erfindung betrifft ein Verfahren sowie eine Vorrichtung zur Regelung einer Drehfeldmaschine (14), insbesondere einer Synchronmaschine, bei der eine Längsspannung (Ud) und eine Querspannung (Uq) als Stellgrößen der Regelung ermittelt werden, und die einen Pulswechselrichter (12) umfasst, der die Phasenspannungen der einzelnen Phasen (U,V,W) erzeugt und in Abhängigkeit vom Betriebsmodus der elektrischen Maschine (14) entweder im PWM-Betrieb oder im Blockbetrieb angesteuert wird. Zur Vereinfachung der Hardwarekomponente (2) der Regelvorrichtung wird vorgeschlagen, PWM-Steuersignale (20,23,24) und Block-Steuersignale (21,25,26) mittels einer Software (1) zu erzeugen und diese einer PWM-/Blocksignal-Einrichtung (18) in Abhängigkeit vom Betriebsmodus zuzuführen, wobei die Einrichtung (18) in der Lage ist, in Abhängigkeit vom zugeführten Steuersignal (23,24 bzw. 25,26) entweder PWM- oder Blocksignale (27 bzw. 28) als Ansteuersignal für den Pulswechselrichter (12) zu erzeugen.

Fig. 3

EP 1 441 436 A2

**Beschreibung**

Die Erfindung betrifft ein Verfahren und eine Vorrichtung zur Regelung einer elektrischen Maschine, insbesondere einer Synchronmaschine, in einer feldorientierten Regelung, gemäss dem Oberbegriff des Patentanspruchs 1 bzw. 6.

Bei einer feldorientierten Regelung werden aus dem gemessenen Regel-Istwert, wie z.B. den Phasenströmen oder -spannungen einer 3-Phasen-Drehfeldmaschine, unter Berücksichtigung vorgegebener Sollwerte, eine Längsspannung (Ud) und eine Querspannung (Uq) als Stellgrößen der Regelung ermittelt. Die Stellgrößen Ud, Uq werden dann üblicherweise in Ansteuerimpulse für ein Pulswechselrichter umgewandelt, der die sinusförmigen Phasenspannungen (U,V,W) der elektrischen Maschine einstellt. Die Regelung einer elektrischen Maschine erfolgt bei niedrigen Drehzahlen üblicherweise im PWM-Betrieb (PWM: Pulsweitenmodulation) und bei hohen Drehzahlen im Blockbetrieb.

Aus dem Stand der Technik ist auch eine Regeleinrichtung bekannt, bei der die Art der Ansteuerung drehzahlabhängig zwischen PWM- und Blockbetrieb umgeschaltet werden kann.

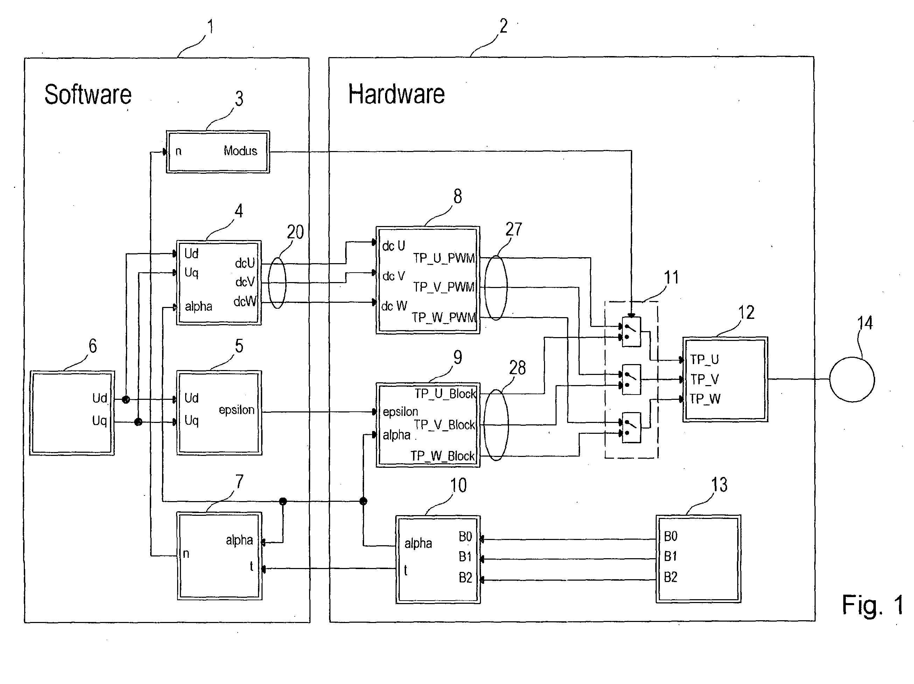

Fig. 1 zeigt eine solche Regeleinrichtung, bei der zwischen PWM- und Blockbetrieb umgeschaltet werden kann. Die Regeleinrichtung umfasst im wesentlichen eine Softwarekomponente 1 und eine Hardwarekomponente 2, wobei die Software 1 verschiedene Steuersignale dcU, dcV, dcW, epsilon, erzeugt, die der Hardware 2 zugeführt werden. Die Hardware 2 generiert daraus PWM-Signale TP_X_PWM (X steht dabei stellvertretend für die Phasen U,V,W) und Blocksignale TP_X_Block, die dem Pulswechselrichter 12 bei niedrigen bzw. bei hohen Drehzahlen n zugeführt werden.

Im einzelnen umfasst die Software 1 eine Einrichtung 6 zur feldorientierten Regelung, die aus dem Istwert der Regelgrößen, wie z.B. den Phasenspannungen oder -strömen der elektrischen Maschine 14, unter Berücksichtigung eines vorgegebenen Sollwertes (z.B. für ein Soll-Drehmoment oder eine Soll-Ausgangsspannung), eine Längsspannung Ud und eine Querspannung Uq als Stellgrößen der Motorregelung (im kartesischen Koordinatensystem) ermittelt. Die Stellgrößen Ud, Uq werden einer in Software realisierten Einheit 4 zugeführt, die auch als inverser Park-Transformator bezeichnet wird. Dieser transformiert die Längs- und Querspannung Ud bzw. Uq unter Berücksichtigung eines Polradwinkels alpha in PWM-Steuersignale dcX (Signal 20), die der Hardware 2 zugeführt werden.

Die Software 1 umfasst ferner eine Einheit 5 zur Erzeugung eines Block-Steuersignals, im vorliegenden Fall eines Steuerwinkels epsilon. Der Einheit 5 werden ebenfalls die Längs- und die Querspannung Ud bzw. Uq zugeführt. Für die Berechnung des Steuerwinkels gilt:

$$\text{epsilon} = \arctan \frac{Ud}{Uq}$$

Außerdem umfasst die Software 1 eine Einrichtung 7 zur Drehzahlberechnung, die aus der zeitlichen Änderung des Polradwinkels alpha eine Drehzahl n berechnet, die an eine Einrichtung 3 zur Auswahl eines Ansteuermodus weitergeleitet wird. Die Ansteuermodus-Auswähleinrichtung 3 steuert eine in Hardware realisierte Schalteinrichtung 11, mit der zwischen dem PWM-Betrieb und dem Blockbetrieb umgeschaltet werden kann.

Die Hardware 2 umfasst eine PWM-Einheit 8 zur Erzeugung von PWM-Signalen, die der Schalteinrichtung 11 zugeführt werden. Die PWM-Einheit 8 erhält an ihrem Eingang die PWM-Steuersignale dcX vom inversen Park-Transformator 4 und erzeugt daraus die PWM-Signale.

Die Hardware 2 umfasst ferner ein Blockschaltwerk 9 zur Erzeugung von Blocksignalen TP_X_Block, die ebenfalls der Schalteinrichtung 11 zugeführt werden. Das Blockschaltwerk 9 erhält an seinem Eingang den von der Einheit 5 berechneten Steuerwinkel epsilon und wird direkt vom Polradwinkel alpha getaktet.

Die Schalteinrichtung 11, an deren Eingang sowohl die PWMals auch die Blocksignale zur Ansteuerung des Pulswechselrichters 12 anliegen, wird von der Auswähleinrichtung 3 derart angesteuert, dass bei niedrigen Drehzahlen, unterhalb einer vorgegebenen Drehzahlschwelle, die PWM-Signale TP_X_PWM, und bei höheren Drehzahlen, oberhalb der Drehzahlschwelle, die Blocksignale TP_X_Block an den Pulswechselrichter 12 durchgeschaltet werden.

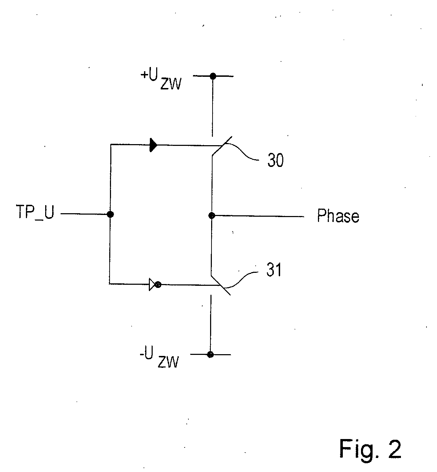

Ein typisches Beispiel eines Pulswechselrichters ist in Fig. 2 vereinfacht dargestellt, wobei nur ein Teil des Pulswechselrichters 12 für eine Phase U gezeigt ist. Der Pulswechselrichter 12 umfasst zwei in Serie geschaltete Schalter 30,31, wie z.B. MOS-Transistoren, die von einem Signal TP_U angesteuert werden. Wegen der Invertierung des Signals TP_U im unteren Zweig der Anordnung arbeiten die Schaler 30,31 gegensinnig. Der Schalter 30 zieht im geschlossenen Zustand das Phasensignal Ph_U auf eine positive Zwischenkreisspannung +Uzw (in diesem Zustand ist der Schalter 31 geöffnet). Hingegen zieht der Schalter 31 im geschlossenen Zustand (in diesem Zustand ist der Schalter 30 geöffnet) das Phasenpotential Ph_U auf eine negative Zwischenkreisspannung -Uzw. Die Schalter 30,31 werden entweder im PWM-Betrieb mittels der PWM-Signale TP_U_PWM oder im Blockbetrieb mittels der Blocksignale TP_U_Block angesteuert.

Die Regelvorrichtung 1,2 umfasst ferner einen Lagesensor 13, aus dessen Ausgangssignalen B0, B1, B2 eine Einrichtung 10 den Polradwinkel alpha ermittelt.

Bei der in Fig. 1 dargestellten Regelvorrichtung werden die PWM-Signale TP_X_PWM und die Blocksignale TP_X_Block durch zwei separate Hardware-Einheiten 8 bzw. 9 erzeugt. Die Generierung von PWM- und Blocksignalen mittels unterschiedlicher Einrichtungen ist jedoch relativ aufwendig, da ein spezielles Steuergerät mit zwei solcher Hardware-Einheiten bereitgestellt werden muss.

Es ist daher die Aufgabe der vorliegenden Erfindung, die Hardwarekomponente der Regelvorrichtung wesentlich zu vereinfachen.

Gelöst wird diese Aufgabe gemäß der Erfindung durch die im Patentanspruch 1 sowie im Patentanspruch 6 angegebenen Merkmale. Weitere Ausgestaltungen der Erfindung sind Gegenstand von Unteransprüchen.

Der wesentliche Gedanke der Erfindung besteht darin, sowohl die PWM-Signale als auch die Block-Signale für einen Pulswechselrichter mittels einer universellen PWM-/Blocksignal-Einrichtung zu erzeugen, der je nach Betriebsmodus entweder PWM-Steuersignale oder Block-Steuersignale zugeführt werden und die entsprechend entweder ein PWM-Signal oder ein Blocksignal für einen nachgeschalteten Pulswechselrichter erzeugt. (Unter dem Begriff "PWM-Steuersignal" oder "Block-Steuersignal" wird ein Signal verstanden, das die Schaltflanken des PWM-Signals bzw. des Blocksignals bestimmt. PWM-Signale bzw. Blocksignale sind dagegen solche Signale, die unmittelbar zur Ansteuerung der Transistoren des Pulswechselrichters dienen). Sämtliche PWM- bzw. Block-Steuersignale werden somit von der Softwarekomponente der Steuervorrichtung generiert und der PWM-/Blocksignal-Einrichtung in Abhängigkeit vom Betriebsmodus zugeführt. Es ist daher möglich, mit nur einer einzigen Einheit, die vorzugsweise als Hardware-Einrichtung realisiert ist, sowohl PWM- als auch Blocksignale zu erzeugen, und die PWM- bzw. Block-Steuersignale mittels der Software zu erzeugen. Die Auswahl der PWM- oder der Block-Steuersignale, die an die PWM-/Blocksignal-Einrichtung weitergeleitet werden, wird vorzugsweise von einer ebenfalls in Software realisierten Schalteinrichtung getroffen.

Eine Vorrichtung zur Regelung einer Drehfeldmaschine, wie z.B. einer permanent erregten Synchronmaschine, in einer feldorientierten Regelung, mit einem Pulswechselrichter, der die Phasenspannungen der einzelnen Phasen der elektrischen Maschine erzeugt, umfasst erfindungsgemäß zumindest:

- eine in Software realisierte Einheit zum Erzeugen eines PWM-Steuersignals,
- eine in Software realisierte Einheit zum Erzeugen eines Block-Steuersignals,
- eine Schalteinrichtung, die in einem PWM-Modus das PWM-Steuersignal und in einem Block-Modus das Block-Steuersignal auswählt und an eine als Hardware realisierte PWM-/Blocksignal-Einrichtung weiterleitet, und
- eine PWM-/Blocksignal-Einrichtung, der in Abhängigkeit vom Betriebsmodus wahlweise das PWM-Steuersignal oder das Block-Steuersignal zugeführt wird und die an ihrem Ausgang entweder das PWM-Signal oder das Blocksignal erzeugt.

Der Betriebsmodus wird z.B. durch die aktuelle Drehzahl der Maschine bestimmt, kann aber wahlweise auch durch eine andere Größe, wie z.B. durch eine Funktion aus Längs- Ud und Querspannung Uq bestimmt werden.

Die universelle PWM-/Blocksignal-Einrichtung umfasst vorzugsweise eine Einrichtung zur Erzeugung eines periodischen Signals, wie z.B. einen Sägzahngenerator, und einen Komparator, der das zugeführte PWM- bzw. Block-Steuersignal mit dem periodischen Signal vergleicht. Anhand einer Schwellenwert-Überwachung des periodischen Signals mit dem zugeführten Steuersignal kann die PWM-/Blocksignal-Einrichtung in Abhängigkeit vom Betriebsmodus entweder das PWM-Signal oder das Blocksignal erzeugen.

Die Einrichtung zur Erzeugung eines periodischen Signals ist vorzugsweise ein Sägezahngenerator. Im Vergleich zur Verwendung eines Dreiecksignalgenerators verringert sich dadurch der Rechenaufwand des Komparators.

Die Umschaltzeitpunkte für das Blocksignal (d. h. die Zeitpunkte, an denen eine positive oder negative Schaltflanke auftritt) werden vorzugsweise durch Extrapolation des elektrischen Phasenwinkels für die jeweilige Phase unter Berücksichtigung einer aus der Drehzahl der Maschine abgeleiteten Größe, wie z.B. der elektrischen Winkelgeschwindigkeit einer Phase, bestimmt. Dabei wird vorzugsweise ermittelt, ob und wo zwischen der aktuellen abgeleiteten Größe, z.B. dem aktuellen elektrischen Phasenwinkel einer Phase (U,V, W), und der zukünftigen abgeleiteten Größe, z.B. dem zukünftigen Phasenwinkel (beim nächsten Abtastzeitpunkt) der Phase (U,V,W), ein Umschaltvorgang des Blocksignals stattfindet. Dies kann in einfacher Weise mittels einer Softwareroutine durchgeführt werden.

Die Erfindung wird nachstehend anhand der beigefügten Zeichnungen beispielhaft näher erläutert. Es zeigen:

Fig. 1 eine aus dem Stand der Technik bekannte Regelvorrichtung für eine dreiphasige Synchronmaschine;

Fig. 2 eine vereinfachte Darstellung eines Teils eines Pulswechselrichters aus dem Stand der Technik;

Fig. 3 eine bevorzugte Ausführungsform einer Regelvorrichtung gemäß der Erfindung;

Fig. 4 eine Darstellung verschiedener Steuersignale für die Erzeugung eines Center-Aligned-PWM-Signals;

Fig. 5 eine Darstellung verschiedener Steuersignale für die Erzeugung eines Blocksignals;

Fig. 6 eine Ausführungsform einer PWM-/Blocksignal-Einrichtung gemäß der Erfindung;

Fig. 7a,b verschiedene Zustände eines Blocksignals für mehrere Phasen U,V,W; und

Fig. 8 ein Raumzeigerdiagramm, das die verschiedenen Zustände des Blocksignals der einzelnen Phasen U,V,W angibt.

Bezüglich der Erläuterung der Fig. 1 und 2 wird auf die Beschreibungseinleitung verwiesen.

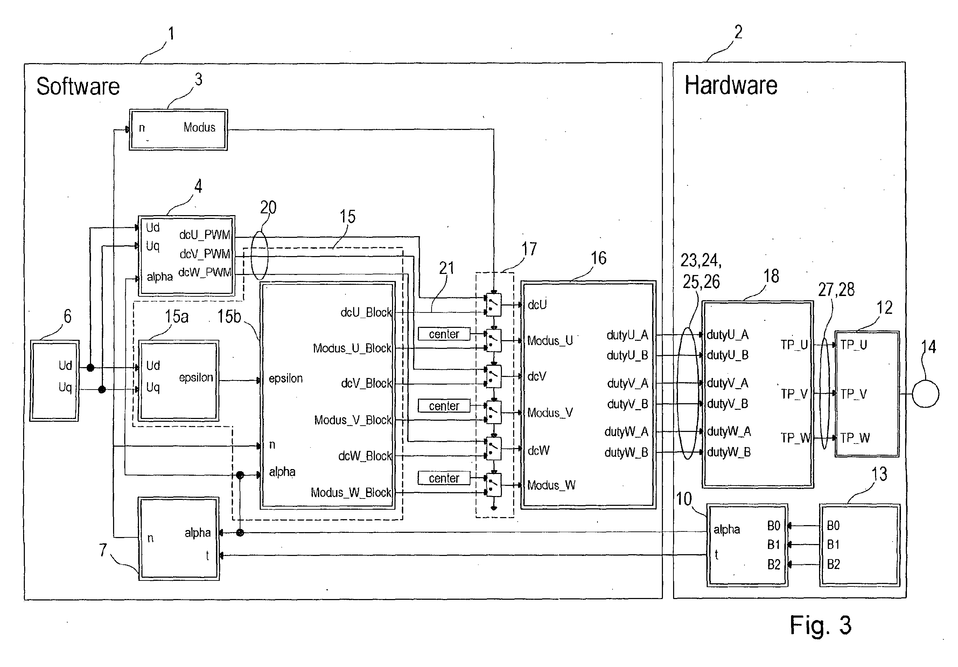

Fig. 3 zeigt eine Regelvorrichtung zur Durchführung einer Momentenregelung für eine dreiphasige Synchronmaschine, wie sie z.B. als Startergenerator in einem Kfz eingesetzt wird. Die Regelvorrichtung umfasst eine Softwarekomponente 1 und eine Hardwarekomponente 2 und arbeitet im wesentlichen nach folgendem Prinzip:

Die Software 1 umfasst einen Regler 6 zur Durchführung einer feldorientierten Regelung, dem z.B. eine Bordnetzspannung eines vom Startergenerator 14 versorgten Bordnetzes (nicht gezeigt) als Regelgröße zugeführt wird und der unter Berücksichtigung eines Sollmoments eine Längsspannung Ud und eine Querspannung Uq (im kartesischen Koordinatensystem) als Stellgrößen der Regelung erzeugt. Diese Stellgrößen werden im folgenden softwaremäßig aufbereitet und in Steuersignale 20,21 bzw. 23-26 für eine PWM-/Blocksignal-Einrichtung 18 gewandelt, die als Hardware realisiert ist.

Die PWM-/Blocksignal-Einrichtung 18 ist in der Lage, in Abhängigkeit von den zugeführten Steuersignalen einen nachgeordneten Pulswechselrichter 12, der die Phasenspannungen der einzelnen Phasen U,V, W der elektrischen Maschine 14 erzeugt, entweder im PWM-Betrieb oder im Block-Betrieb anzusteuern. Hierzu erzeugt die PWM-/Blocksignal-Einrichtung 18 entweder ein PWM-Signal 27 oder ein Blocksignal 28 an ihrem Ausgang TP_X.

Die Entscheidung zwischen PWM- und Blockbetrieb wird von einer Modus-Auswähleinrichtung 3 der Software 1 getroffen. Der Betriebsmodus wird im dargestellten Beispiel durch die aktuelle Drehzahl n der Maschine 14 bestimmt, kann aber auch durch eine andere Größe bestimmt werden.

Die Software 1 umfasst eine von der Modus-Auswähleinrichtung 3 angesteuerte Schalteinrichtung 17, die im PWM-Modus das PWM-Steuersignal 20 und im Block-Modus das Block-Steuersignal 21 auswählt und an die PWM-/Blocksignal-Einrichtung 18 weiterleitet. In Abhängigkeit von den von der Software 1 erhaltenen Steuersignalen 23,24 bzw. 25,26 erzeugt die PWM/Blocksignal-Einrichtung 18 somit entweder ein PWM- 27 oder ein Blocksignal 28 an ihren Ausgängen TP_X (X steht stellvertretend für die einzelnen Phasen U,V,W). Es ist also nur eine einzige Hardwareeinrichtung 18 zur Erzeugung sowohl der PWM- 27 als auch Blocksignale 28 erforderlich.

Die Aufbereitung der Stellgrößen Ud und Uq in Steuersignale 23-26 für die PWM-/Blocksignal-Einrichtung 18 erfolgt durch verschiedene Software-Einheiten 4,15 und 16. Bei den in Software realisierten Einheiten 4,15,16 etc. handelt es sich insbesondere um Programmabschnitte. Zur Erzeugung der PWM-Steuersignale 23,24 wird mittels eines inversen Parktransformators 4 zunächst ein PWM-Steuersignal 20 berechnet. Der inverse Parktransformator 4 erhält die Eingangsgrößen Ud,Uq und den Polradwinkel alpha und berechnet daraus das PWM-Steuersignal 20, das an den Ausgängen dcU_PWM, dcV_PWM, dcW_PWM ausgegeben wird. Das PWM-Steuersignal 20 wird dann einer Umrechnungseinheit 16 zugeführt, die aus dem PWM-Steuersignal 20 die spezifischen Steuersignale 23,24 für die PWM-/Blocksignal-Einrichtung 18 erzeugt.

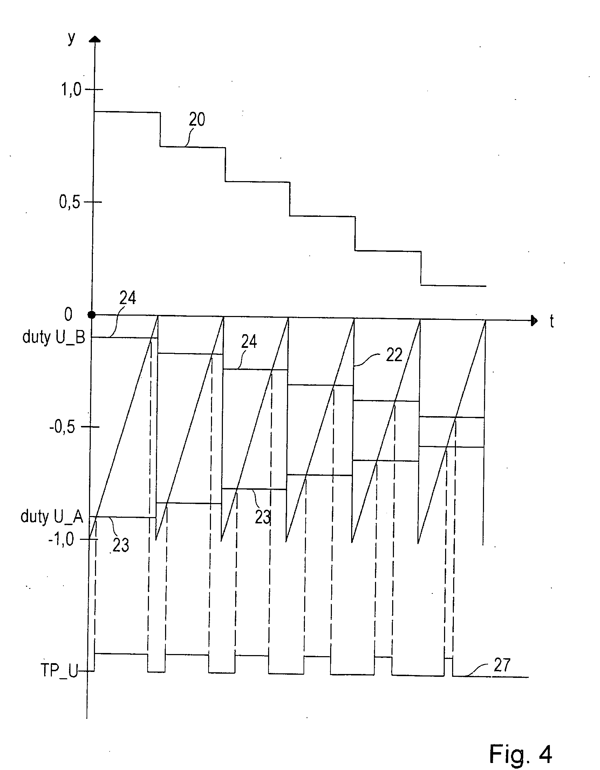

Die Softwareeinheit 16 berechnet bei niedrigen Drehzahlen, unterhalb einer vorgegebenen Drehzahlschwelle, die PWM-Steuersignale 23,24. Bei diesen handelt es sich um Schaltschwellen für einen sogenannten Center-Aligned-PWM-Betrieb, wie er in Fig. 4 dargestellt ist. Die Steuersignale 23,24 bestimmen die Umschaltzeitpunkte der am Ausgang TP_X der PWM-/Blocksignal-Einrichtung 18 ausgegebenen PWM-Signale 27.

Fig. 4 zeigt im oberen Bereich beispielhaft ein PWM-Steuersignal 20, das vom inversen Parktransformator 4 für die Phase U ausgegeben wird. Im mittleren Bereich von Fig. 4 sind die PWM-Steuersignale 23,24 eingezeichnet, die von der Umrechnungseinheit 16 im Falle des PWM-Betriebs ausgegeben werden. Die an den Ausgängen duty_X_A, duty_X_B ausgegebenen PWM-Steuersignale 23,24 für den center-aligned-PWM-Betrieb lassen sich durch folgende Formel berechnen:

$$duty\_X\_A = (dcX/2 * Z\ddot{a}hler_{max})$$

$$duty\_X\_B = (Z\ddot{a}hler_{max} - ((dcX/2) * Z\ddot{a}hler_{max})$$

Dabei ist der Wert $Z\ddot{a}hler_{max}$ gleich dem Maximalwert eines Zählers, wie beispielsweise eines Sägezahngenerators, der das mit dem Bezugszeichen 22 gekennzeichnete Signal erzeugt.

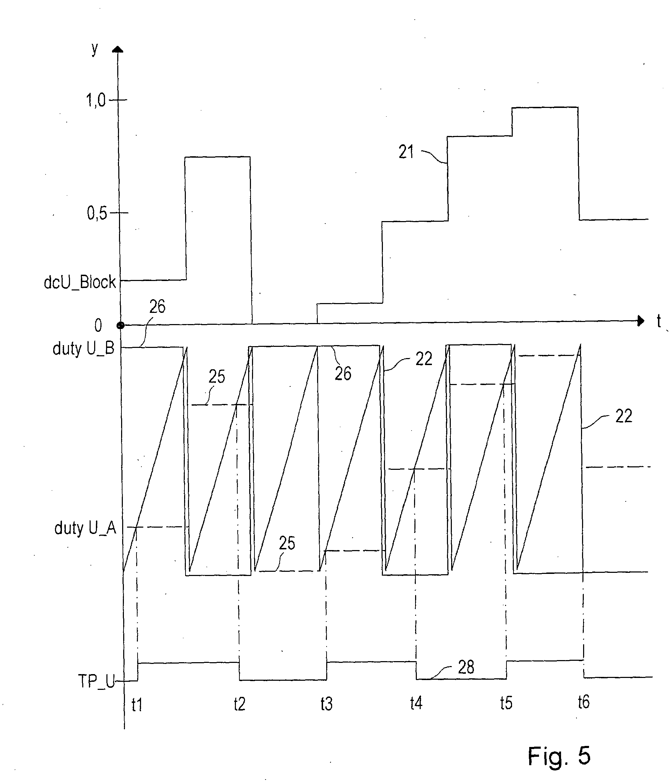

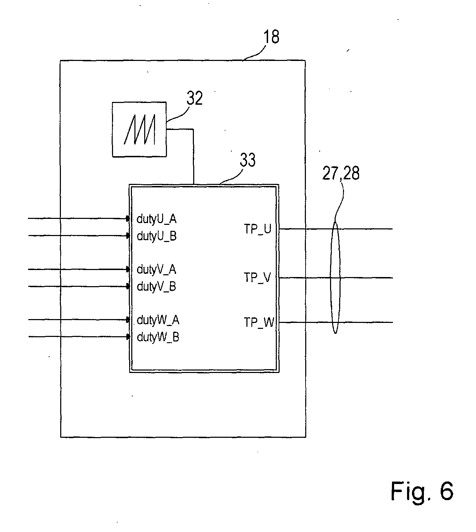

Die PWM-Steuersignale 23,24 werden dann der PWM-/Blocksignal-Einrichtung 18 zugeführt, die einen Sägezahngenerator 30 und einen Komparator 31 aufweist, wie er in Fig. 6 dargestellt ist. Der Sägezahngenerator 30 gibt ein Sägezahnsignal 22 (siehe Fig. 5) aus, das vom Komparator 31 mit den PWM-Steuersignalen 23,24 verglichen wird. Überschreitet der Zählwert des Sägezahngenerators 30 die durch das PWM-Steuersignal 23 vorgegebene untere Schaltschwelle, so erzeugt die PWM-/Blocksignaleinrichtung 18 eine positive Schaltflanke im Signal 27. Bei Überschreiten der oberen Schaltschwelle 24 (siehe Fig. 4) erzeugt die PWM-/Blocksignal-Einrichtung 18 eine negative Schaltflanke (oder umgekehrt). Auf diese Weise wird z.B. das in Fig. 4 dargestellte PWM-Signal 27 erzeugt, das zur Ansteuerung des Pulswechselrichter 12 dient.

Für die Ansteuerung des Pulswechselrichters 12 im Blockbetrieb gemäß Fig. 5 ist eine Einrichtung 15 zur Erzeugung von Block-Steuersignalen 21 vorgesehen, die aus einer Einrichtung 15a zur Berechnung eines Steuerwinkels epsilon und einer Einrichtung 15b zur Berechnung der Umschaltzeitpunkte ti der Blocksignale 28 besteht. Die Steuerwinkel-Berechnungseinheit 15a berechnet zunächst aus den Stellgrößen Ud,Uq den Steuerwinkel epsilon, wobei gilt:

$$epsilon = \arctan \frac{Ud}{Uq}$$

Die Einheit 15b zur Berechnung der Umschaltzeitpunkte t1-t6 des Blocksignals 28 (siehe Fig. 5) berechnet dann unter Berücksichtigung des Steuerwinkels epsilon, der Motordrehzahl n und des Polradwinkels alpha für jede einzelne Phase U,V,W das zugehörige Block-Steuersignal 21. Die Einheit 15b hat die Eingänge epsilon,n,alpha und die Ausgänge dcU_Block, dcV_Block und dcW_Block, sowie Ausgänge Modus U_Block, Modus V_Block und Modus W_Block. An den Ausgängen dcX_Block werden die Block-Steuersignale 21, und an den Ausgängen Modus_X_Block ein Modussignal ausgegeben, welches der nachfolgenden Umrechnungseinheit 16 anzeigt, dass eine Ansteuerung im Block-Betrieb erfolgen soll.

Die Block-Steuersignale 21 (dcX_Block) und damit auch die Schaltschwellensignale (d.h. die Steuersignale 25,26) für den Blockbetrieb werden vorzugsweise durch Extrapolation des elektrischen Phasenwinkels $alpha_x$ berechnet. Dabei wird in einem ersten Schritt ein aktueller elektrischer Phasenwinkel, z.B. $alpha_u$ für die Phase U, berechnet, wobei z.B. folgende Gleichung angesetzt werden kann:

$$alpha_u = \arctan(Uq/Ud) + alpha - 90°$$

wobei alpha der mechanische Polradwinkel ist.

Im nächsten Schritt wird der elektrische Phasenwinkel $alpha_u$ extrapoliert, d.h., es wird der zukünftige Phasenwinkel $alpha_u(t+dt)$ unter Berücksichtigung der elektrischen Winkelgeschwindigkeit $omega_{el}$ berechnet, der sich für einen zukünftigen Abtastzeitpunkt t+dt einstellen würde. (Ein Abtastwert wird z.B. bei jedem Rücksprung des Sägezahngenerator aufgenommen). Für den zukünftigen Phasenwinkel gilt:

$$alpha_u (t+dt) = alpha_u + omega_{el}\, dt$$

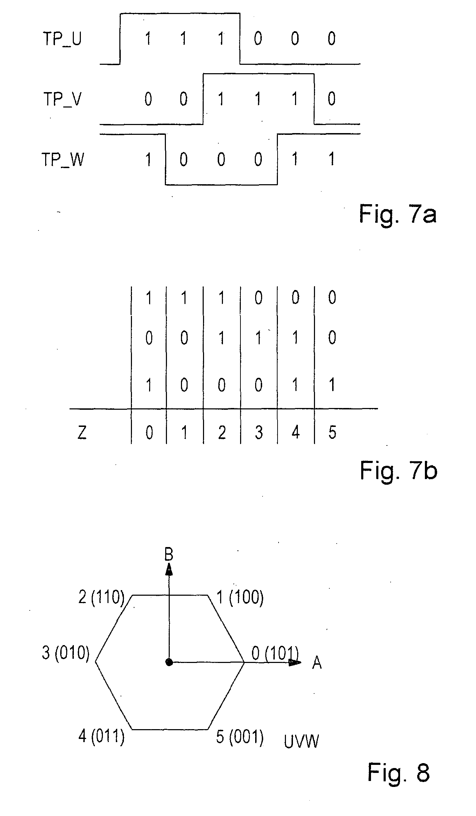

Im folgenden wird festgestellt, ob und wo zwischen diesen beiden Abtastwerten ein Umschaltvorgang im Blocksignal 28 stattfindet. Zur Erläuterung des Verfahrens zur Bestimmung der Umschaltzeitpunkte ti des Blocksignals 28 wird im folgenden auf die Fig. 7a und 7b Bezug genommen.

Fig. 7a zeigt den Verlauf der Blocksignale 28 an den Ausgängen TP_U, TP_V und TP_W der PWM-/Blocksignal-Einrichtung 18. Wie zu erkennen ist, sind die einzelnen Blocksignale 28 um jeweils 120° phasenverschoben. Über alle Phasen U,V,W, betrachtet können dabei insgesamt 6 Zustände auftreten, die in Fig. 7b dargestellt sind. Werden die Schaltzustände der Blocksignale TP_U,TP_V und TP_W wie gezeigt mit "logisch 1" und »logisch 0" bezeichnet, so ergeben sich die in Fig. 7b dargestellten Kombinationen. Insgesamt existieren sechs Schaltzustände, die mit den Ziffern 0-5 bezeichnet sind. Ein Umschaltvorgang von einem Zustand zum nächsten tritt dabei alle 60° (elektrischer Phasenwinkel) auf.

Die Schaltzustände können auch durch ein Raumzeigerdiagramm, wie es in Fig. 8 gezeigt ist, dargestellt werden. Die einzelnen Schaltzustände sind dabei mit den Ziffern 0-5 gekennzeichnet.

Wie erwähnt, muss zur Bestimmung der Block-Steuersignale 21 bzw. 25,26 festgestellt werden, ob und wo zwischen zwei Abtastwerten ein Umschaltvorgang im Blocksignal 28 stattfindet. Hierzu wird zunächst der Wertebereich der Winkel $alpha_x$ von 0-2pi auf einen Wertebereich von 0-6 umnormiert.
In einem nächsten Schritt wird der berechnete Winkel $alpha_x$ diskretisiert. Die Diskretisierung gibt an, in welchem der 6 Raumzeigerbereiche, z.B. 0...5 der Winkel $alpha_x$ liegt.

Durch Subtraktion des aktuellen und des zukünftigen diskreten Winkels kann festgestellt werden, wieviele Umschaltvorgänge zwischen dem aktuellen (t) und dem zukünftigen Zeitpunkt (t+dt) liegen. Die Subtraktion ergibt z.B. einen Wert:

0    für keinen Umschaltvorgang bis zum zukünftigen Abtastzeitpunkt (t+dt)

1    für einen Umschaltvorgang auf einer Phase U,V, W in Vorwärtsrichtung bis zum zukünftigen Abtastzeitpunkt (t+dt) oder

- 2    für einen Umschaltvorgang auf zwei Phasen U,V, W in Rückwärtsrichtung bis zum zukünftigen Abtastzeitpunkt (t+dt)

Im folgenden wird die Berechnung der Umschaltzeitpunkte ti des Blocksignals 28 nochmals anschaulich erläutert: Angenommen der aktuelle elektrische Phasenwinkel $alpha_u$ für die Phase U beträgt 50° (siehe z.B. Fig. 8), und der Wert zum nächsten Abtastzeitpunkt t+dt beträgt 70°, so ereignet sich in diesem Beispiel (bei 60°) ein Umschaltvorgang vom Zustand 0 in den Zustand 1. Der Umschaltvorgang ist in Fig. 7a besonders gut zu erkennen, in der das Blocksignal 28 der Phase W vom Zustand "1" in den Zustand "0" schaltet. Die Diskretisierung der berechneten Winkel $alpha_U$, $alpha_U(t+dt)$ ergibt für den Zeitpunkt t den diskreten Zustand 1 und für den Zeitpunkt t+dt den diskreten Zustand 0. Durch Subtraktion des aktuellen vom zukünftigen diskreten Winkel ergibt sich somit der Wert -1.

Anhand des aktuellen Winkels $alpha_u$ kann entschieden werden, auf welcher bzw. welchen Phasen ein Umschaltvorgang stattgefunden hat bzw. stattfinden wird. Darüber hinaus kann festgestellt werden, wie groß die prozentuale Entfernung zwischen dem aktuellen Abtastzeitpunkt t und dem Umschaltzeitpunkt bezogen auf die Abtastschrittweite ist. Im vorliegenden Beispiel ist die Abtastschrittweite 20° (zwischen 50° und 70°) und der Umschaltzeitpunkt bei $alpha_u$ = 60° (im stationären Betrieb liegen die Umschaltzeitpunkte der Blocksignale 28 bei n*60°). Der Umschaltzeitpunkt liegt im vorliegenden Fall also genau in der Mitte einer Abtastschrittweite bei 50% des Maximalwertes des Sägezahnsignals 22. Das Block-Steuersignal 21 für die Phase W würde somit z.B. den Wert 50% erhalten.

Aus dem Block-Steuersignal 21 berechnet die Umrechnungseinheit 16 schliesslich die spezifischen Schwellenwert-Steuersignale 25,26 für den Blockbetrieb, wie sie in Fig. 5 dargestellt sind.

Das Schwellenwert-Steuersignal 25 ist dabei ein aus dem Block-Steuersignal 21 abgeleitetes Signal, das die Schaltschwellen zu den Zeitpunkten t1-t6 des Blocksignals 28 vorgibt. Das zweite Schaltschwellen-Steuersignal 26 bestimmt dabei die Richtung des Schaltvorgangs (positive oder negative Schaltflanke).

Wie erwähnt, berechnet die Umrechnungseinheit 16 bei niedrigen Drehzahlen die spezifischen PWM-Steuersignale 23,24 für den PWM-Betrieb und bei hohen Drehzahlen die spezifischen Block-Steuersignale 25,26 für den Blockbetrieb. Zur Erkennung des Betriebsmodus wird der Umrechnungseinheit 16 ein Modussignal, entweder das Modussignal "center" für den center-aligned-PWM-Betrieb oder das Modussignal Modus_X_Block für den Blockbetrieb, über eine Schalteinrichtung 17 zugeführt, wobei die Schalteinrichtung 17 in Abhängigkeit von der Drehzahl n entweder das Modussignal "center" für den PWM-Betrieb oder das Modussignal Modus_X_Block für den Blockbetrieb auswählt. Die Schalteinrichtung 17 dient gleichzeitig dazu, in Abhängigkeit vom Betriebsmodus entweder die vom inversen Parktransformator 4 gelieferten PWM-Steuersignale 20 oder die von der Einheit 15 erzeugten Block-Steuersignale 21 an die Umrechnungseinheit 16 weiterzuleiten. Die universelle PWM-/Blocksignal-Einrichtung 18 erzeugt dann in Abhängigkeit von den von der Umrechnungseinheit 16 erzeugten Steuersignalen 23-26 ein PWM-Signal 27 oder ein Blocksignal 28.

Bezugszeichenliste

| 1 | Software |
|---|---|
| 2 | Hardware |
| 3 | Einheit zur Bestimmung des Ansteuer-Modus |
| 4 | Inverser Parktransformator |
| 5 | Steuerwinkel-Berechnungseinheit |
| 6 | Regeleinheit zur feldorientierten Regelung |
| 7 | Einheit zur Drehzahlberechnung |
| 8 | PWM-Einheit |
| 9 | Blockschaltwerk |
| 10 | Einheit zur Bestimmung des Polradwinkels |
| 11 | Schalteinrichtung |
| 12 | Pulswechselrichter |
| 13 | Lagesensor |
| 14 | Elektrische Maschine |
| 15 | Einheit zur Erzeugung von Block-Steuersignalen |
| 15a | Steuerwinkel-Berechnungseinheit |
| 15b | Einheit zur Bestimmung der Umschaltzeitpunkte |
| 16 | Umrechnungseinheit |
| 17 | Schalteinrichtung |
| 18 | PWM-/Blocksignal-Einrichtung |
| 20 | PWM-Steuersignal |
| 21. | Block-Steuersignal |
| 22 | Sägezahnsignal |
| 23,24 | PWM-Schaltschwellensignale |
| 25,26 | Block-Schaltschwellensignale |
| 27 | PWM-Signal |
| 28 | Blocksignal |
| 30,31 | Schalter |
| 32 | Sägezahngenerator |
| 33 | Komparator |
| U,V,W | Phasen |
| ti | Umschaltzeitpunkte |

**Patentansprüche**

**1.** Vorrichtung zur Regelung einer Drehfeldmaschine (14), insbesondere einer Synchronmaschine, in einem feldorientierten Regelverfahren, bei dem eine Längsspannung (Ud) und eine Querspannung (Uq) als Stellgrößen der Regelung ermittelt werden, umfassend einen Pulswechselrichter (12), der die Phasenspannungen der einzelnen Phasen (U,V,W) erzeugt und der entweder im PWM-Betrieb mittels eines PWM-Signals (20) oder im Blockbetrieb mittels eines Blocksignals (21) angesteuert wird, **gekennzeichnet durch**

- eine in Software realisierte Einrichtung (4,16) zum Erzeugen eines PWM-Steuersignals (20,23,24), das die Umschaltzeitpunkte (ti) des PWM-Signals (27) bestimmt,

- eine in Software realisierte Einrichtung (15,16) zum Erzeugen eines Block-Steuersignals (21,25,26), das die Umschaltzeitpunkte (ti) des Blocksignals (28) bestimmt,
- eine Schalteinrichtung (17), die in einem PWM-Modus das PWM-Steuersignal (20) und in einem Block-Modus das Block-Steuersignal (21) auswählt und an eine PWM-/Blocksignal-Einrichtung (18) weiterleitet, und
- die PWM-/Blocksignal-Einrichtung (18), der wahlweise das PWM-Steuersignal (23,24) oder das Block-Steuersignal (25,26) zugeführt wird und die an ihrem Ausgang (TP_U,TP_V,TP_W) entweder das PWM-Signal (27) oder das Blocksignal (28) bereitstellt.

2. Vorrichtung nach Anspruch 1, **dadurch gekennzeichnet, dass** die PWM-/Blocksignal-Einrichtung (18) eine Einrichtung (30) zur Erzeugung eines periodischen Signals (22) und einen mehrphasigen Komparator (31) aufweist.

3. Vorrichtung nach Anspruch 2, **dadurch gekennzeichnet, dass** die Einrichtung (30) zur Erzeugung des periodischen Signals (22) ein Sägezahngenerator (30) ist.

4. Vorrichtung nach einem der vorhergehenden Ansprüche, **dadurch gekennzeichnet, dass** die Einrichtung (4,16) zur Erzeugung von PWM-Steuersignalen (20,23,24), die Einrichtung (15,16) zur Erzeugung von Block-Steuersignalen (21,25,26), sowie die Schalteinrichtung (17) in Software realisiert sind.

5. Vorrichtung nach einem der vorhergehenden Ansprüche, **dadurch gekennzeichnet, dass** die Einrichtung (15) zur Erzeugung des Block-Steuersignals (21) das Block-Steuersignal (21) durch Extrapolation des elektrischen Phasenwinkels (alpha$_u$) unter Berücksichtigung einer aus der Drehzahl (n) abgeleiteten Größe, wie z.B. der elektrischen Winkelgeschwindigkeit (omega$_{el}$) einer Phase (U,V,W), ermittelt und bestimmt, ob und wo zwischen der aktuellen Größe (alpha$_u$) und der extrapolierten Größe (alpha$_{u+dt}$) eine Zustandsänderung des Blocksignals (28) auftreten wird.

6. Verfahren zur Regelung einer Drehfeldmaschine (14), insbesondere einer Synchronmaschine, bei dem eine Längsspannung (Ud) und eine Querspannung (Uq) als Stellgrößen der Regelung ermittelt werden, die in Abhängigkeit vom Betriebsmodus entweder in ein PWM-Signal (27) oder ein Blocksignal (28) zur Ansteuerung eines Pulswechselrichters (12) gewandelt werden, der die Phasenspannungen der einzelnen Phasen (U,V,W) erzeugt, **gekennzeichnet durch** folgende Schritte:

- Erzeugen eines PWM-Steuersignals (20,23,24), das die Umschaltzeitpunkte (ti) des PWM-Signals (27) bestimmt, mittels einer Software-Einheit (4),
- Erzeugen eines Block-Steuersignals (21,25,26), das die Umschaltzeitpunkte (ti) des Blocksignals (28) bestimmt, mittels einer zweiten Software-Einheit (15)
- Auswählen des PWM-Steuersignals (20) im PWM-Modus oder des Block-Steuersignals (21) im Blockmodus mittels einer Schalteinrichtung (17), und
- Zuführen des ausgewählten Steuersignals (20,21) oder eines daraus abgeleiteten Signals (23,24;25,26) zu einer PWM-/Blocksignal-Einrichtung (18), die in der Lage ist, in Abhängigkeit vom zugeführten Steuersignal (23,24; 25,26) entweder das PWM-Signal (27) oder das Blocksignal (28) zu erzeugen.

7. Verfahren nach Anspruch 6, **dadurch gekennzeichnet, dass** die PWM-/Blocksignal-Einrichtung (18) eine Einrichtung (30) zur Erzeugung eines periodischen Signals (23) und einen mehrphasigen Komparator (31) umfasst und ein Vergleich zwischen dem zugeführten Steuersignal (23,24;25,26) und dem periodischen Signal (22) durchgeführt wird.

8. Verfahren nach Anspruch 6 oder 7, **dadurch gekennzeichnet, dass** das PWM-Steuersignal (20) oder das Block-Steuersignal (21) von der Schalteinrichtung (17) ausgewählt und an eine Umrechnungseinrichtung (16) weitergeleitet wird, die aus dem PWM-Steuersignal (20) oder dem Block-Steuersignal (21) ein auf die PWM-/Blocksignal-Einrichtung (18) abgestimmtes modifiziertes Steuersignal (23,24;25,26) berechnet und an die PWM-/Blocksignal-Einrichtung (18) weiterleitet.

9. Verfahren nach Anspruch 6 oder 7, **dadurch gekennzeichnet, dass** das PWM-Steuersignal (23,24) oder das Block-Steuersignal (25,26) von der Schalteinrichtung (17) ausgewählt und direkt an einen Pulswechselrichter (12) weitergeleitet wird.

Fig. 1

EP 1 441 436 A2

Fig. 2

Fig. 3

Fig. 4

Fig. 5

18

32

33

27,28

dutyU_A
dutyU_B

dutyV_A
dutyV_B

dutyW_A
dutyW_B

TP_U

TP_V

TP_W

Fig. 6

| TP_U | 1 | 1 | 1 | 0 | 0 | 0 |
| TP_V | 0 | 0 | 1 | 1 | 1 | 0 |
| TP_W | 1 | 0 | 0 | 0 | 1 | 1 |

Fig. 7a

| | 1 | 1 | 1 | 0 | 0 | 0 |
| | 0 | 0 | 1 | 1 | 1 | 0 |
| | 1 | 0 | 0 | 0 | 1 | 1 |
| Z | 0 | 1 | 2 | 3 | 4 | 5 |

Fig. 7b

B

2 (110)    1 (100)

3 (010)    0 (101)   A

4 (011)    5 (001)   UVW

Fig. 8

14